# EUROPEAN PATENT APPLICATION

(11) **EP 3 076 161 A1**
(43) Date of publication of application: **05.10.2016**
(21) Application number: 15162286.7
(22) Date of filing: 01.04.2015
(51) Int. Cl.: G01N 21/552, G01N 21/65, B82Y 20/00

(54) **A SUBSTRATE AND A METHOD OF USING IT**

(71) Applicant: Danmarks Tekniske Universitet, 2800 Kgs. Lyngby (DK)
(72) Inventor: Thilsted, Anil Haraksingh, 2200 Copenhagen Ø (DK); Schmidt, Michael Stenbæk, 2450 Copenhagen SV (DK); Rindzevicius, Tomas, 21532 Malmø (SE); Boisen, Anja, 3460 Birkerød (DK)
(74) Representative: Inspicos P/S

(57) **Abstract**

A substrate for a plurality of different measurement set-ups such as SERS, SPR and LSPR which substrate has a base and a plurality of elongate elements with metallic tips. A metallic layer is present on the base surface between the elongate elements and gaps or cavities exist between the layer and the tips or elongate elements. When the elongate elements and the base are transparent, transmission measurement set-ups are also possible.

## Description

The present invention relates to a substrate suitable for identifying substances or quantifying parameters thereof, such as using SERS measurements or the like. Also, the invention relates to methods of using the substrate for identifying these and/or quantifying such parameters. The substrate is very versatile and may be used for both transmissive and non-transmissive set-ups.

Technologies of this type may be seen in US2012/0273662, US2013/330710, US2013/040862, US8339597, US84155640, US2014/015548, US2012/081703 and WO13/130043.

A first aspect of the invention relates to a substrate comprising a base having a first surface part and a plurality of elongate elements extending away from the substrate and from the first surface part, wherein:
- the base and elongate elements are transparent at at least a first predetermined wavelength,
- the elongate elements have a tip of a first material, being an electrically conducting material and/or semiconductor material, the tip having, in a direction at least substantially perpendicular to an axis of the pertaining elongate element, a width of 5nm - 2µm,
- a layer of a second material, being an electrically conducting material and/or semiconductor material, the layer being provided on the first surface part, a gap or cavity existing between the layer and each of one or more of the elongate tips.

In the present context, a substrate may be any type of element. The substrate may be made of any material or combination of materials. The substrate has, due to the elongate elements with metallized tip(s) and the layer, a surface which may be used for e.g. SERS measurements. This is described further below.

In the present context, the base preferably is a plane base, as this is the easiest base to provide the elongate elements on. However, the base may have any shape or thickness and may be made of any material. In e.g. SERS measurements, the base has virtually no influence, so the construction of the base is, in that respect, not important. The base, however, is transparent.

The first surface part is an outer surface part of the base. This surface may be plane (apart from the elongate elements extending therefrom), bent/curved or the like. If the base is slab-shaped, the first surface part may be one of the surfaces, such as one of the major surfaces, of the base.

In the present context, an elongate element is an element which has a longest dimension, along a longitudinal axis, extending away from the base. Preferably, all elongate elements extend away from the base in at least substantially the same direction. Preferably, this direction is perpendicular to the first surface part, at least at the position where the individual elongate element is attached to or engages the base. "Extending away from" will mean that there is a non-zero angle between a longitudinal axis of the individual elongate element and the first surface part at the position thereof from which the elongate element extends. This angle preferably exceeds 10°, such as exceeding 20°, such as exceeding 45°, such as exceeding 70°such as exceeding 80°. In many embodiments, the elongate elements are at least substantially perpendicular to the base. The elongate element has a thickness perpendicular to the longitudinal axis.

It is noted that the elongate elements may be provided on or attached to, such as fixed to or grown on, the base or may have been made by removing material from an initial substrate, so that the base and elongate elements are one monolithic element. Alternatively, the base and elongate elements may be of different materials and may be made in different processes, such as by firstly providing the base and subsequently providing the elongate elements on the base.

Preferably more than a single elongate element has a tip of the first material. Actually, preferably at least 10%, such as at least 30%, preferably at least 50%, such as at least 75%, preferably at least 90%, such as at least 99% of the elongate elements have a tip of the first material.

Any number of elongate elements may be used. In fact, usually the number of elongate elements is defined not by the number thereof but the density thereof on the first surface part.

In this context, a tip is a surface at least substantially covering a part of the elongate element, which part is the farthest from the base along the longitudinal axis. The tip needs not cover any part of the elongate element between the farthest part and the base. However, depending on the thickness and manner of deposition of the tip, 1% or more, such as 2% or more, such as 5%, 10%, 20%, 40% or more of the length of the elongate element, between the base and the farthest part, may be covered by the tip. The tip may be an even layer or an uneven layer on the elongate element.

Even though it is desired that the tip of an elongate element fully covers the farthest part, production imperfections may occur whereby a percentage of the farthest part is not covered.

It is noted that the tip of each elongate element preferably is separate from the tips of other elongate elements. Thus, each tip is able to move independently of others, at least before the below mentioned leaning.

The tips or at least a part thereof have, in a direction at least substantially perpendicular to an axis of the pertaining elongate element, a width of 5nm - 2µm, preferably 20-1000nm. Preferably, a layer thickness of the first material of the tip is 5nm or more, such as 10nm or more, preferably 25nm or more, such as 40nm or more. In one situation, the layer thickness is no more than 35%, such as no more than 30%, preferably no more than 25%, such as no more than 20% of a mean distance/spacing between elongate elements at the base. In this situation, the tips are separate and may move independently of each other.

In the present context, the base and/or elongate elements are transparent, when a layer of 100nm of the material forming the base/elongate element transmits at least 10% of radiation at the first wavelength. The first wavelength may in principle be a very narrow waveband and may be any wavelength of radiation. Preferably, however, the first wavelength is a waveband of a width of at least 50nm, such as within the UV-NIR regime (300-1500nm), within which the base/elongate elements are transmissive.

The tips are made of a first material being an electrically conducting material and/or semiconductor material. The layer is made of a second material also being an electrically conducting material and/or semiconductor material. The first and second materials may be identical or not. The first and second materials may have the same or different properties, such as different electrical conductivity, if desired. In this connection, an electrically conducting material preferably is a metal, such as Cu, Ag, Au, Pt, Pa or Al, but in principle, an electrically conducting material may be used, such as also TiNi. It is noted that the tips may be made of a single, solid material or a sandwich comprising a layer of the above conducting material which may be covered with a passivating layer, such as a layer of Al2O3, TiO2, SiO2, glass or the like.

The layer is provided on the first surface part, and a gap or cavity exists between the layer and the elongate tips. An advantage of the presence of the gap/cavity is that radiation may travel from below the layer to above the layer, such as to the tips or substances provided thereon. Thus, compared to a standard SERS substrate, a more versatile substrate is obtained which may be used for a wider variety of measurements and set-ups.

Preferably, the gaps/cavities exist between the layer and the elongate elements and thus not only between the layer and the tips. In that manner, radiation may pass between the elongate elements and the layer. Alternatively, the layer may extend to the elongate elements which, then, are of a sufficient height to provide the gap/cavity between the layer and the tips.

The layer preferably covers at least 50% of the parts of the first surface part excluding the elongate elements and the gaps/cavities (when provided between the layer and the elongate elements), as the layer then also facilitates additional types of measurements compared to standard SERS substrates. In particular, the cavities/gaps may make LSPR and transmissive SERS measurements possible even when the layer and tips are relatively thick and non transparent.

In one embodiment, the base and elongate elements are a monolithic element. In this manner, no interface, such as a difference or variation in refractive index, exists between the base and one or more elongate elements. Changes in refractive index may cause reflection of the radiation and may thus prevent transmission of radiation from the base to the elongate elements or vice versa.

In a preferred embodiment, the base and/or elongate elements is/are made of, or at least comprise(s) mainly, fused silica. Other relevant materials for the base and/or elongate elements are SiO2, Al2O3, TiO2, carbon, and polymers such as PMMA, SU-8, polycarbonate or the like.

In one embodiment, each of the base and elongate elements is/are made of a material transmitting, through a thickness of 0.5mm, at least 20% of radiation in a waveband, including the first wavelength, having a width of at least 100nm and being within the wavelength interval of 100nm-1.3µm. This transmission preferably is present for all wavelengths in the waveband. Preferably, the material(s) of the base and elongate elements transmit(s) more than 20% of incident radiation, such as in a 200nm wavelength range in the UV-NIR regime (300-1500nm) through a 0.5mm thick sample.

The first and/or second materials may be selected from the group consisting of: Ag, Au, Pt, TiNi, Pa, Al, Cu, a group III-V material and/or a semiconductor material.

Preferably, the elongate elements have a height, in a longitudinal direction thereof, of 20-1000nm, such as 30-500nm, such as 50-400nm, such as 75-300 nm. One, more or all elongate elements may have a height, along a longitudinal direction thereof, of at least 30nm, such as at least 40nm, preferably at least 50nm, such as at least 100nm, preferably at least 200 nm, such as at least 400, 500, 600, 700, 1000, 1200, 1400 or 1600 nm.

In one situation, an elongate element, or preferably more than 10, 20, 30, 40, 50, 60, 70, 80, 90 or 95% of the elongate elements, preferably has/have a height being at least 2 times a mean spacing between the elongate elements. The mean spacing may be determined from the density of elongate elements, such as by assuming that the elongate elements are positioned in a perfect pattern on the base, such as in straight columns and rows.

Preferably, a majority of the elongate elements, i.e. at least 50%, such as at least 60%, preferably at least 70%, such as at least 80%, preferably at least 90% or 95% of the elongate elements, have a height within 20%, such as within 10%, preferably within 5%, of a mean height of the majority of the elongate elements. In this manner, the tips will be within at least substantially the same height also when leaning (see below). If the tips are positioned in at least substantially the same plane, it will be easier to e.g. focus a laser beam thereon when performing a measurement. In addition, when the tips are in at least substantially the same height before leaning, the leaning tips will form hotspots as opposed to a tip leaning against a part of an elongate element with no metal surface.

Preferably, the elongate elements have a width, perpendicular to a longitudinal direction thereof, of 5-1500nm, such as 5-500nm, such as 5-50nm. This width may be a width of the elongate element not including the tip, which normally is wider. The width may be a mean width or largest width at any longitudinal position or e.g. at the centre/middle thereof, excluding the tip and/or the first material.

In that or another situation, an elongate element, or preferably more than 10, 20, 30, 40, 50, 60, 70, 80, 90 or 95% of the elongate elements, has/have a ratio between a height along the longitudinal axis thereof and the width thereof of at least 5, such as at least 6, at least 7, at least 8, at least 9, at least 10, at least 15 or at least 20.

In the below-mentioned leaning condition, it is desired that the elongate elements are able to firstly lean and secondly bend at a well defined position. Clearly, if one elongate element bends or primarily bends at the base and the other no more than 10% from the tip, formation of groups of tips will differ. Leaning at e.g. the base or close to the base will give the elongate element a longer "range" to form a group with other tips.

In one embodiment, the elongate element, or preferably a majority of the elongate elements, such as at least 50%, 60%, 70%, 80%, 90% or at least 95% of the elongate elements, has/have a neck portion, the tip having a larger cross section, perpendicular to the longitudinal direction, than the neck portion which is positioned closer to the base than the tip, a mean width, also in the perpendicular direction, of the neck portion being no more than 80%, such as no more than 75%, such as no more than 70%, preferably no more than 65%, such as no more than 60%, 55% or 50%, of a mean width of the tip or the width of the elongate element.

Defining or providing a neck portion will aid in providing a well defined bending point or a point where an overall part of the bending takes place. Preferably, this neck portion is positioned far from the tip portion in order for the part of the elongate element between the neck portion and the tip to be as long as possible.

In that or another embodiment, at least one elongate element, but preferably each of at least 10%, 20%, 30%, 40%, 50%, 60%, 70%, 80%, 90% or at least 95% of the elongate elements, has/have a spring constant of no more than 250 N/m, such as no more than 100N/m, preferably no more than 50N/m, such as no more than 20N/m. An estimate of a 100nm diameter 600 nm tall Si pillar is about 12.3 N/m.

In that or another embodiment, at least one elongate element, but preferably each of at least 10%, 20%, 30%, 40%, 50%, 60%, 70%, 80%, 90% or at least 95% of the elongate elements, is/are bendable, so that providing a force to the tip thereof, the force being perpendicular to the longitudinal direction, of no more than 20 µN, will make the tip move at least 50% of a height of the elongate element along the longitudinal direction, in a direction perpendicular to the longitudinal direction.

The low force makes the formation of groups possible without the risk of breaking the elongate elements, if they are too stiff.

In a particularly interesting embodiment, a number of the elongate elements lean or bend. In this situation, a plurality of groups of elongate elements exist, the tips of the elongate elements of each group being positioned within a distance of 20nm or less, such as at least 15nm, such as at least 10nm, such as at least 5nm, from each other.

In this context, a group of elongate elements is a number of elements having a tip being within 20nm of a tip of another elongate element in the group.

It has been found that these groups of tips are especially efficient in e.g. SERS. Thus, it is desired to have as many groups or especially as many tips form part of a group as possible.

Thus, preferably, at least 25%, such as at least 35%, preferably at least 50%, such as at least 75%, of the elongate elements each form part of a group with at least 3 elongate elements.

It is clear, especially in the leaning situation, that the density of elongate elements, the sizes of the tips when covered by metal, the bendability of the elongate elements as well as where, along their lengths, the elongate elements bend, will determine the ability of forming of groups of tips.

In one embodiment, the elongate elements are positioned with a density of 15.6*10⁵-25*10¹² elongate elements per cm² (corresponding to a spacing between centre lines of elongate elements by 20-8000nm). The usual density is approximately 1.0*10⁹ elongate elements per cm².

The elongate elements may be positioned randomly on the base. An advantage of this may be that the production method may be cheap so that the product price may be low.

Alternatively, the elongate elements may be positioned periodically on the base. The advantage of this is that there may be a strong inter-coupling between modes on the tips and the layer at the surface of the substrate.

However, it is preferred that the elongate elements are positioned, on the substrate, with a density of no more than 4x10⁹ tips per cm², such as no more than 3x10⁹ tips per cm², such as no more than 2x10⁹ tips per cm², as a too high density may make individual metallization of the tips difficult.

Naturally, if the area of the substrate or base at which the elongate elements are positioned is less than 1cm², the density may be determined for smaller areas. One manner of determining the density is to outline a surface from which the elongate elements extend, determine the area thereof and determine the number of elongate elements therein, such as the number of elongate elements which, within the area, contact, engage, are attached to, are fixed to or otherwise touch the base/substrate within the area. Below, a substrate is described which has elongate elements which bend. In this situation, the tips of elongate elements may extend outside of the area, but the elongate elements still extend from within the area.

In one embodiment, the gap(s)/cavity(ies) between the layer and one or more tip(s) is/are 1-2500nm wide, such as 10-2000nm, such as 50-1000nm, such as 100-500nm, such as around 200nm. As mentioned above, the gaps allow radiation to pass from below the layer to the tips (or vice versa). On the other hand, the gaps should be sufficiently small to allow coupling between tip modes and layer modes. In one embodiment, the gap(s)/cavity(ies) between the layer and one or more elongate element(s) is/are 1-500nm wide. As mentioned above, the gaps, combined with the transmissive base and elongate elements, allow radiation to pass through the base from one side of the layer to the other.

Preferably, the gap(s)/cavity(ies) between the layer and one or more elongate element(s) prevent(s) electrical connection between the layer and the tip(s) of the pertaining elongate element(s). Naturally, the function of the gaps/cavities may be altered or altogether destroyed by too much electrically conducting material provided on one or more elongate elements in positions other than at the tips and/or on the base in the cavities/gaps, if such cavities/gaps exist between the layer and the elongate elements. Thus, it is desired that any electrically conducting material positioned on the elongate elements, and not on or at the tips, and/or in gaps/cavities on the base, has a thickness of no more than 15% of a layer thickness of the layer of the tips. Preferably, any layer of such conductive material has a thickness of no more than 50nm.

Preferably, the layer has a thickness, such as a mean thickness, of 5-1000nm, such as 50-500nm, such as 100-300nm, such as around 200nm. This thickness may support SPR modes in the layer.

In a particularly interesting embodiment, the elongate elements are tube-shaped elements. These elements have the further advantage that additional plasmonic resonances may be seen. With elements of this type, resonances may be seen both in the longitudinal direction and circumferentially

The elongate elements may be solid so as to have, in a cross section perpendicular to the longitudinal axis, no hollowness or cavities. On the other hand, the cross section may comprise a hollowness, so that the elongate elements, or some thereof, are tube shaped elements. These tube shaped elements are elements extending from the base but which have an outer wall and an inner cavity, which often is open at the other end of the tube shaped element than that at which it engages or touches the base. Preferably, the tube shaped element has the same cross section or at least substantially the same cross sectional shape along a length thereof. This cross section may be an outer shape being circular, square, triangular or any other, regular or irregular shape, and the hollowness or inner channel thereof may have any cross section, which preferably is the same shape as the outer shape of the tubular element so that the wall thickness of the tubular element is at least substantially the same around the cavity in the cross section. Production imperfections naturally may occur.

The tube shaped element will have a tip which is provided on an upper part of the tube shaped element. This upper part or edge may be more or less parallel (exist in a plane parallel) to a plane of the surface. The tip may be made of any of the above materials and preferably covers at least an upper edge of the tube shaped element. The material may additionally cover at least a part of an outer surface of the tube shaped element from the upper edge and toward the base and at least a part of an inner surface of the tube shaped element from the upper edge and toward a bottom of the cavity thereof.

A thickness of the layer of the tip may vary along the tube shaped element and may reduce in size from the upper edge and toward the base. The thickness of the layer on the outer walls may be 0-500nm, such as 10-100nm, preferably around 20nm. Preferably, the thickness of the metal layer on the upper surface/edge of the walls is 10-200nm, preferably around 100nm.

The cavity/gap exists between the layer and the tip material. If the tip material extends to the base, the cavity/gap may be provided exposing a part of the surface, and if the tip material does not extend to the base or layer, the gap/cavity may extend along a portion of the longitudinal direction of the tube shaped element. When the cavity is provided on the surface, i.e. between the tube shaped element and the layer, the overall cavity diameter or length may be 20-2000nm, such as 100-1000nm, preferably around 600nm.

Preferably, the tube shaped element has a height, along the longitudinal axis from a plane, for example, of the base, to the upper edge, 10-4000nm, such as 100-2000nm, such as 300-1000nm, preferably around 500nm. The outer circumference of the tube shaped element, such as in a plane perpendicular to the longitudinal axis, may be 60-9000nm, such as 250-4000nm, such as 1000-2000nm. If the tube shaped element has a circular cross section, the diameter of the tube shaped element 140 may be 10-1500nm, such as 200nm. The circumference of the cavity or the inner circumference of the wall, in the cross section, of the tube shaped element may be 30-9000nm, such as 300-3000nm, such as 200-2000nm. If the cavity is circular in cross section, the inner diameter of the of the tube shaped element 140 may be 5-1500nm, such as 100-1000nm, such as 150-500nm, preferably around 170nm.

A formation or portion of a material suitable for use on the tips may be provided on the bottom of the cavity, where a gap may be provided between this formation/portion and the inner walls of the tube shaped element. This gap may be 0-400nm, such as 2-100nm, such as 3-50nm, such as 4-10nm, preferably around 5nm. Alternatively, the formation/portion may extend to the walls where a gap may exist between the material of the formation/portion and the material of the tip, so that any tip material provided on the inner wall of the tube shaped element does not extend to the formation/portion.

A spacing between neighbouring tube shaped elements may be 10-5000nm, such as 100-2000nm, such as 200-1000nm, preferably around 400nm.

Another aspect of the invention relates to a method of identifying a substance, the method comprising the steps of:
- providing a substrate according to the first aspect of the invention,
- providing the substance on the tips and layer of the substrate,
- launching first radiation comprising radiation of a second predetermined wavelength toward the substance,
- detecting second radiation output from the substance at a third predetermined wavelength, the second and/or third wavelength being identical to the first wavelength,
- identifying the substance from the detected second radiation.

In this context, the substance may be any type of substance, such as explosives, chemicals, hormones. Any type of molecule can in principle be identified and, if desired, quantified.

The providing of the substance on the tips and layer may be performed by bringing the substance on a liquid or gas form, such as by adding the substance to, such as dissolving the substance in a liquid.

In a particular embodiment, the substance is applied to the substrate in liquid form and allowed to dry. Due to the small dimensions of the cavities/gaps, liquid may still be present here when other parts of the substrate are dry, so that the measurement and thus the identification may be made while the substance is on liquid form without liquid interfering with the other parts of the substrate and to the radiation at other positions than in the cavities/gaps. In fact, situations may exist where the substance in the liquid is up-concentrated in the gaps/cavities due to e.g. evaporation of parts of the liquid at other parts of the substrate.

When the step of providing the substance on the tips and layer comprises delivering a liquid to the substrate, an evaporation of the liquid from the substrate may bring about the above- and below-mentioned leaning of the elongate elements.

The second radiation is output from the substrate. This "outputting" will depend on the relationship between the wavelength of the second radiation and the properties of the substance. This may be radiation relating to a vibration of the molecule, scattered radiation, transmitted radiation or the like. Different types of set-ups are now possible. Radiation (white light, a selected wavelength, focused on a small area, flood lighting the whole substrate or a larger area) may be provided from the tip side (or the opposite side of the layer and base) of the substrate to interact with the substrate in the vicinity of the tips/layer/cavities. The resulting radiation (scattered, reflected, unabsorbed) may be collected from the same side of the base or from an opposite side of the base.

For example, in SERS measurements, a laser is focused on to a portion of the substrate and the substance is identified from the resulting scattering spectrum. This spectrum may be determined from radiation directed back toward the direction of arrival of the laser beam or may be received from an opposite side of the substrate.

In SPR, the radiation (could be laser radiation or a broader spectrum) is directed into the base from different angles, and the resulting radiation may be received also from the base and determined as a function of angle of receipt in relation to a plane of the base. The radiation may also be received from the opposite side of the base.

In a preferred embodiment, the second radiation is formed by the first radiation being scattered by the substance.

The detection of the second radiation may be a standard detection of the wavelength, such as a spectrum, of the second radiation and/or an intensity thereof.

The identity of the substance may be determined from known spectra, also known as fingerprints, of known substances. Often, substrates of this type are used for identifying a substance the contents of which are not known.

Quantification of a substance from a spectrum thereof is a well-known procedure.

A major advantage of the present substrate is that it may be used for different types of measurements. In fact, the same substrate may be used in a sequence of different set-ups so that it is ascertained that the measurements are performed on the same substance. Providing a substance on a series of different substrates always entails the risk that one substrate is contaminated or provided with another or a slightly different substance or concentration thereof than another, so comparison may not be possible.

It is preferred to adapt the substrate to the substance to be identified. Different substances have different vibration modes and thus will excite different resonances in the substrate. Thus, the dimensions of the substrate may be chosen so as to enhance the resonances brought about by a particular substrate, or the dimensions may generally be selected for supporting resonances in a particular frequency interval. A suitable substrate may then be selected when looking for a particular substance, the frequencies of which are known.

The dimensions having an effect on the supported or enhanced resonances are the distances between the tips and the layer, the tip dimensions, the tube diameter, the tube height, the gap/cavity dimensions but also the layer thickness and the materials selected for the tips and layer.

Naturally, the dimensions and materials may also be tuned to the laser wavelength used in some types of measurements.

In one embodiment, the first and/or the second radiation travels, during the launching step, through at least one gap/cavity. In this manner, a transmission type measurement may be performed where the first radiation is fed to one side of the layer (either from the side with the elongate elements or from the opposite side through the base) and the second radiation is received from the other side of the layer.

Thus, in one situation, during the launching step, at least part of the first radiation is launched toward the substance through the base.

In addition or alternatively, during the detecting step, at least part of the second radiation travels through the base (and additionally or optionally the elongate elements) before detection thereof.

The set-ups using the above tube-shaped elements may be the same as the ones usually used for solid, elongate elements with tips.

In the following, preferred embodiments of the invention will be described with reference to the drawing, wherein:
- figure 1 illustrates, in a cross section and from the side, a substrate according to a first embodiment of the invention,
- figure 2 illustrates a first measuring set-up using a substrate according to the invention,
- figure 3 illustrates a second measuring set-up using a substrate according to the invention, and
- figure 4 illustrates, in a cross section and from the side, different embodiments of tube-shaped elongate elements.

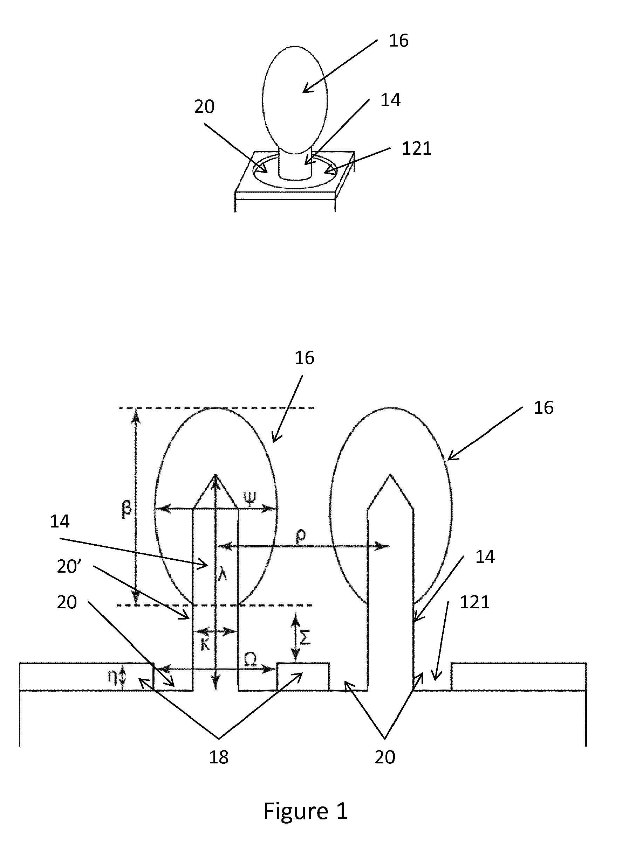

In figure 1, a part of a substrate 10 is illustrated having a base 12 and a number of rods or elongate elements 14 extending from a surface 121 of the base and each having a metal tip 16. On the surface 121, a metal layer 18 is provided and it is seen that a cavity 20 is provided between the rods 14 and the layer 18, the cavity 20 having a minimum distance or width d of 1-500nm. Alternatively, the layer 18 may extend all the way to the rod 14, where a cavity 20' is then present between the layer 18 and the tip 16.

The base 12 and rods 14 are transparent to at least a predetermined first wavelength but usually are made of e.g. glass or fused silica and thus are transparent within a wavelength interval.

This substrate 10 is well suited for many types of analysis, such as analysis based on SERS, and where the substance to be analysed is provided on the substrate and thus on and between the metal tips 16 and the metal layer 18.

Naturally, the substrate may be manufactured in a number of manners and the dimensions thereof may be optimized to different purposes.

The rods 14 may be made of a transparent core having a height (λ) of 40nm to 5µm and a diameter or width (κ) of 5-1500nm, such as from about 5nm to about 500nm, such as from 5-50nm. The tip 16 may be formed by a coating with a thickness of 0.1-1000 nm, such as 5-500nm, usually including a SERS-active material, which may be conductive or a semiconductor, such as, for example, gold, silver, copper, platinum, NiTi, palladium, aluminium, or any other material, such as III-V material or other semiconductors, that will enhance the Raman scattering of photons by analyte molecules positioned adjacent thereto. It may be advantageous that the tips 16 and/or layer 18 have a rough surface.

The tips may have a height (β) of 20-1000nm, such as 100-800nm, such as around 400nm and a width (ψ) of 20-1000nm, such as 30-500nm, preferably around 40nm.

The film may have a thickness (η) of 5-1000nm, such as 100-500nm, preferably around 200nm, and a distance (Σ) between the upper plane of the film and the bottom of the tips may be 2-3000nm, such as 100-2000nm, preferably around 200nm. Actually, this distance may be negative when the cavity 20 is large enough to receive the lower part of the tips.

Each rod 14 of the plurality of rods 14 may be separated from adjacent rods 14 by a distance/spacing (p) of between about 1 nm and about 8µm, such as between about 30 and about 300 nm or about 1-200 nm. This distance may be a distance between surfaces of the rods, a core there of, the tips thereof or from centres of the rods.

It may be desired that the distance separating each rod from adjacent rods is selected to correspond to the size of a particular analyte molecule to be analyzed with the SERS-active structure. In general, the predetermined distance may be selected to correspond to the size of a particular analyte molecule to be analyzed with the, then, SERS-active structure, such that the molecule is capable of draping between two adjacent rods, part of the molecule being adsorbed on a first rod and another part of the molecule being adsorbed on a second, adjacent rod. Such a configuration has been shown to significantly enhance the Raman signal emitted by the analyte molecule.

A particularly interesting embodiment is one, as is also described in WO2011/047690, wherein the substrate comprises clusters of rods leaning toward each other with a distance between tips of on the order of 0-10nm. As mentioned above, these clusters or close inter-tip distances lead to increased sensitivity.

The substrate may be made of any transparent material. Transparent is regarded as being able to transmit more than 20% light in a 200nm wavelength range, preferably in the UV-NIR regime (300-1500nm), through a 0.5mm thick sample of the material. Examples of suitable materials for the substrate is glass, polymers, fused silica, Al2O3, SiO2, TiO2, carbon and polymers, such as polycarbonate, PMMA, SU-8 and the like.

The rods may be made of the same material as the substrate or may be made of a different material. Especially when the rods and substrate are made of the same material, an interface may be avoided between the base of the rods and the substrate. This interface may generate a difference in refractive index and may thus affect the propagation of the light/radiation within the substrate and rods.

The cavities preferably provide an electrical insulation between the layer and the tips. The cavities preferably have significantly less metal/semiconductor than the layer and/or tips, so that no significant electrical connection exists between the surrounding conducting film and the tips.

The cavity may have a width (Ω) of e.g. 10-1800nm, preferably 80nm. This width may be selected on the basis of the electrical conduction between the tips and layer. The lower a conduction obtained, the smaller can the cavity be selected.

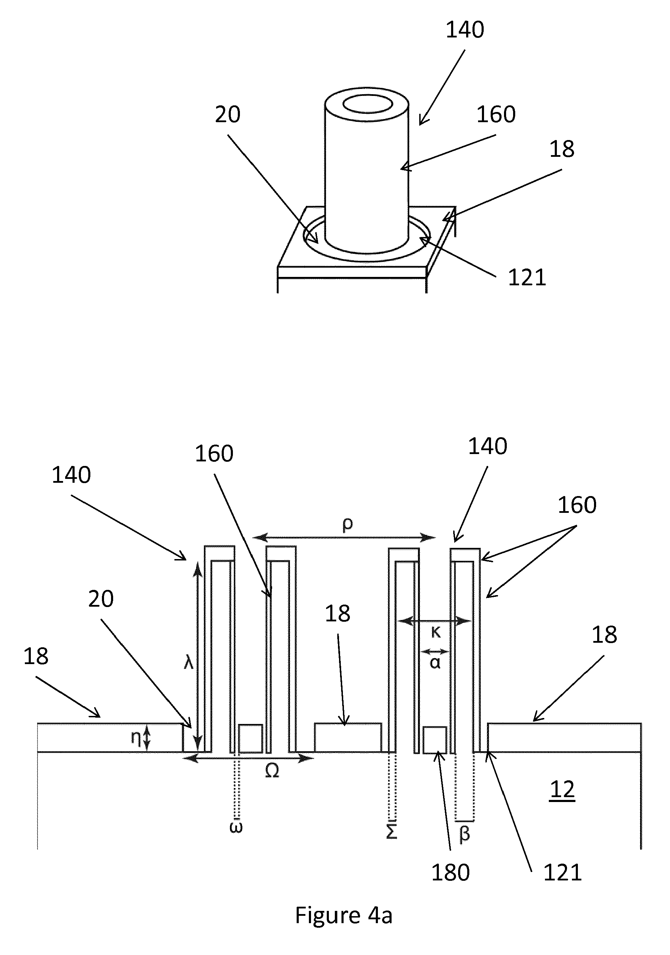

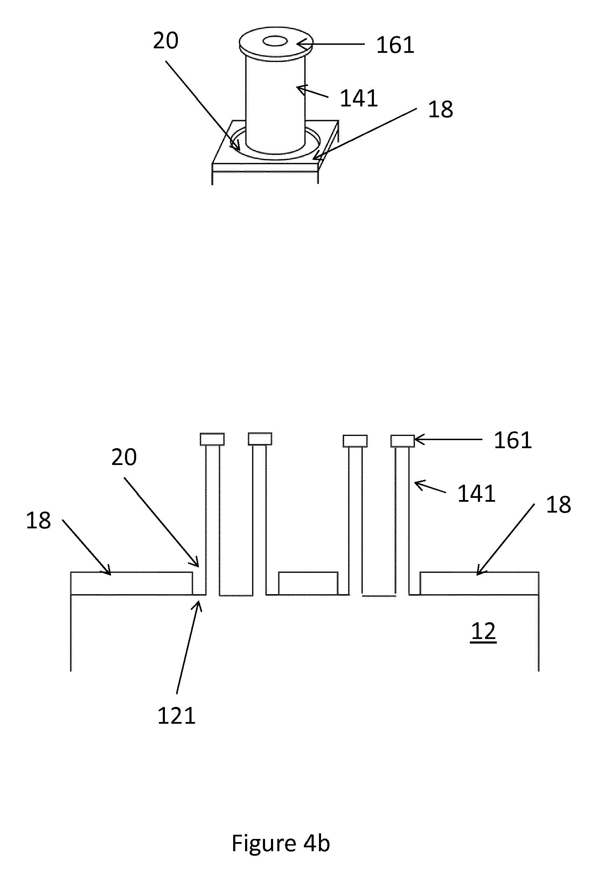

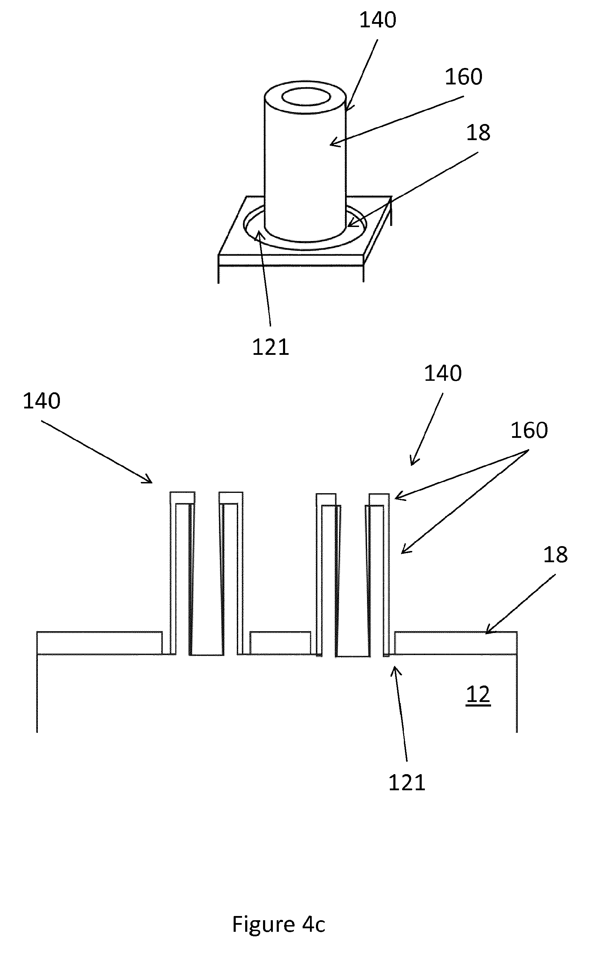

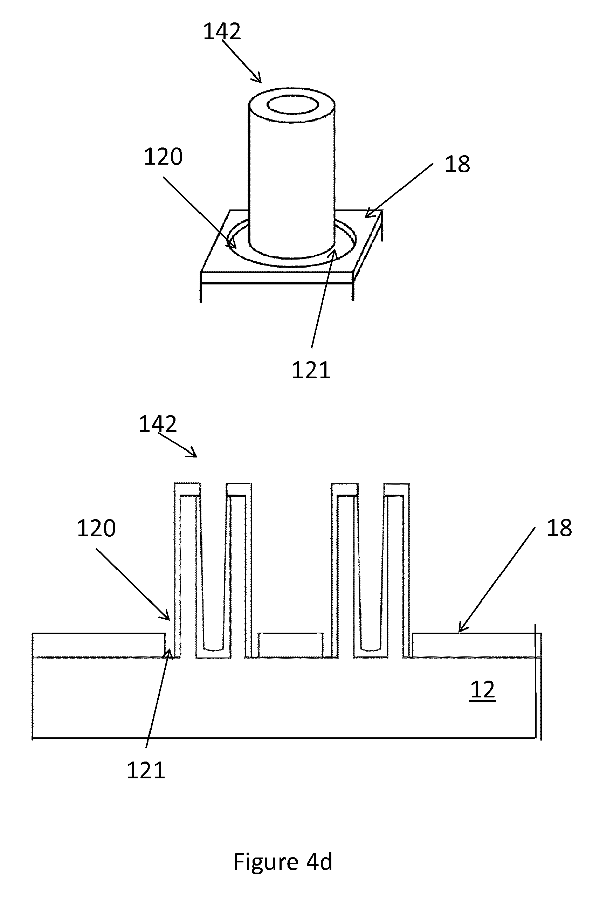

In figure 4, different embodiments of an alternative type of substrate are illustrated wherein, on the base 12, a number of tube shaped elements 140 are illustrated (in a cross section with the inner surfaces illustrated in hatched lines).

In figure 4A, the tube shaped elements 140 are illustrated on the base 12 with the layer 18 provided on the surface 121 and between the elements 140. Preferably, the tube shaped elements 140 have a circular cross section. The tube shaped elements 140 are provided with a coating or tip 160 of a conductive material. This material covers the outer side of the walls of the tube shaped element 140 as well as the top thereof and the inner surfaces, where the layer thickness, as can be seen, is lower. At the bottom of the tube shaped element 140, formations 180 are provided also of a conductive material. A way of producing the tube shaped elements 140 is described below. The providing of the layer 18, the tips/coatings 160 and the formations 180 may take place during the same metallization process.

The materials suitable for the tube shaped elements 140 and the layer 18, tips/coatings 160 and formations 180 are as those described above.

Preferably, the height, λ, is 10-4000nm, such as 100-2000nm, such as 300-1000nm, preferably around 500nm. The outer diameter, K, of the tube shaped element 140 may be 10-1500nm, such as 200nm. The inner diameter, α, of the of the tube shaped element 140 may be 5-1500nm, such as 100-1000nm, such as 150-500nm, preferably around 170nm.

The thickness, η, of the layer may be 2-1000nm, such as 100-500nm, preferably around 200nm.

When the cavities 20 are provided on the surface 121, the overall cavity diameter or length, Ω, may be 20-2000nm, such as 100-1000nm, preferably around 600nm.

Alternatively, the layer 18 may extend to the tube shaped element 140, where the coating 160 of the outer walls is then provided so that it starts at a position above the upper surface of the layer 18 so that a cavity is provided between the layer and the coating 160.

The thickness, Σ, of the layer thickness on the outer walls of the elements 140 may be 0-500nm, such as 10-100nm, preferably around 20nm, and the gap ω, between the inner wall and the formation 180 may be 0-400nm, such as 2-100nm, such as 3-50nm, such as 4-10nm, preferably around 5nm. Preferably, the thickness of the metal layer on the upper surfaces of the walls is 10-200nm, preferably around 100nm.

The spacing between neighbouring tube shaped elements 140 may be 10-5000nm, such as 100-2000nm, such as 200-1000nm, preferably around 400nm.

As described above, the dimensions and materials of the elements 140 may be tuned to a particular measurement setup and a particular analyte.

In figure 4b, another embodiment is seen where the tube shaped element 141 has no coating on the wall sides. A tip coating 161 is provided, and the layer 18 is provided on the surface 121 of the base 12. Also, no formations are seen in the tube shaped elements.

Again, the cavities 20 are illustrated but may be dispensed with, as a cavity or distance is provided between the layer 18 and the coating/donut 161.

Due to the different geometries obtained with the different metallization manners, different plasmonic modes may be excited. It is expected, for example, that a mode will be seen in the donut 161 provided on the tubes.

In figure 4c, an embodiment is seen resembling that of figure 14a, but where the formations 180 are not seen.

In figure 4d, a fourth embodiment is seen where, in the tubes 142, the formations are not seen but a metal layer extends over the inner side walls and across the bottom of the tube.

Again, in figures 14c/d the cavities 20 are illustrated but may be dispensed with, if the outer layer on the outer walls is brought to end at a position above the upper layer surface.

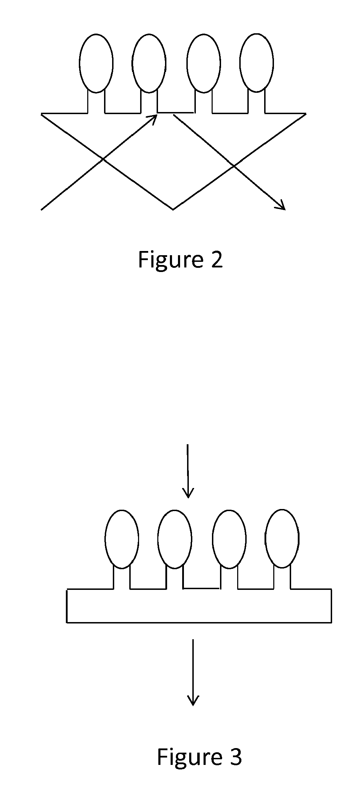

The substrates of figures 1 and 4 may be used in a number of sensor or testing set-ups, such as a standard SERS set-up where radiation is fed (from above) to the rods 14 or tubes 140 and where scattered radiation is detected also from a position above the SERS substrate. The transparency of the substrate 10 now provides a number of alternative set-ups of which a selection is illustrated in figures 2 and 3.

In figure 2, the base 12 is wedge-shaped in order to facilitate launching a beam there into and the emission of radiation there from. Other manners of facilitating entering and exiting of radiation into/from an element are known. In this set-up, the radiation received interacts with the substance to be analysed and is affected by the dimensions of the substrate 10 and the resulting radiation directed into the base 12 may be collected and detected.

In this manner, also substance positioned at or in the cavities 20 may take part in the determination or measurement in addition to that provided at or between the tips 16.

In figure 3, a transmission set-up is described where, as is often seen, radiation is fed to the substrate from above but where the resulting radiation, such as based on SERS, is determined from below the substrate 10.

A number of different measurement types may be used using the above described set-ups.

### LSPR

Using metal nanoarchitectures that are smaller than the wavelength of incident light, a surface plasmon resonance condition is satisfied. This plasmon mode is known as a localized surface plasmon resonance (LSPR). The LSPR enhances local and scattered fields around the particle, exhibiting a distinct color. The LSPR is sensitive to the index of refraction of the surrounding medium, and a change in this causes a change in the color of the particle. Due to the sensitivity of small changes in refractive index, LSPR sensors are suitable for detection of trace molecules, especially biological molecules.

### SPR

Surface plasmon resonance (SPR) utilizes the resonance condition in which incident light excites surface plasmons, usually in metal thin films. SPR is used for detection of trace molecules and especially biochemical experiments due to the sensitivity of the resonance condition to the refractive index of the cladding of the metal film. SPR devices typically use a Kretschmann configuration which requires a prism and a transparent substrate in order to excite an exposed thin film of metal.

### LSPR-SPR

If a metal thin film and metal nanoarchitectures (such as the elongate elements) are in close proximity, a coupling can occur between the surface plasmon in the metal thin film and the LSPR modes of the metal nanoarchitectures. This coupling can enhance sensing both via LSPR as well as SPR, as incident light has to simultaneously couple to the resonance of the metal film as well as the nanoarchitectures.

A large number of alternatives to the above substrates may be derived.

The substrate and rods may be fabricated using a maskless reactive ion etch (RIE) process in which a chemically reactive, volatile plasma is generated and accelerated to etch the surface of an element of the desired material, such as fused silica. The chaotic and self-masking nature of the etching process produces an initial non-uniformity on the surface. This non-uniformity is amplified during the process, leading to the creation of stochastically positioned nanostructures extending from a lower lying surface of the element. Thus, the base and the elongate elements are formed.

To obtain the rods of figure 1, the following process parameters may be used:
- Etching time: 7 min
- SF6 flow rate: 170 sccm
- 02 flow rate: 17 sccm
- Platen power: 75 W
- Coil Power: 600 W
- Pressure: 60 mTorr
- Chuck Temperature: 20 °C

To obtain the tube-shaped elements of figure 4, the same process may be used with, e.g. the following process parameters:
- Etching time: 7 min
- SF6 flow rate: 105 sccm
- 02 flow rate: 25 sccm
- Platen power: 110 W
- Coil Power: 600 W
- Pressure: 40 mTorr
- Temperature: 20 °C

Subsequently, a conductive layer, forming the layer and tips/coatings, may be deposited via e-beam physical vapour deposition

The substrate and rods/tubes alternatively may be produced via other methods including Electron beam lithography, Deep UV lithography, Self-assembly nanobead lithography and/or Interference lithography.

The deposition of the layer/tips may alternatively be obtained by electroplating or sputter deposition.

An adhesion modifying layer may optionally be provided between the transparent substrate/rods and the conducting layer. This anti-adhesion layer may be thin and transparent and used in order to maintain the shape of the nanostructures and the transparency of the device. This layer can be made of a material which changes the manner in which the conducting layer covers the substrate/rods and/or a material which changes the morphology of the tip and/or the cavity. An example of such an adhesion layer is a monolayer of perfluorodecyltrichlorosilane (FDTS) deposited via molecular vapor deposition or a thin film of silicon deposited via plasma enhanced chemical vapor deposition. However this thin adhesion layer can consist of any material deposited via any means.

## Claims

1. A substrate comprising a base having a first surface part and a plurality of elongate elements extending away from the substrate and from the first surface part, wherein:
- the base and elongate elements are transparent at at least a first predetermined wavelength,
- the elongate elements have a tip of a first material, being an electrically conducting material and/or semiconductor material, the tip having, in a direction at least substantially perpendicular to an axis of the pertaining elongate element, a width of 5nm - 2µm,
- a layer of a second material, being an electrically conducting material and/or semiconductor material, the layer being provided on the first surface part, a gap or cavity existing between the layer and each of one or more of the elongate tips.

2. A substrate according to claim 1, wherein the gap or cavity exists between also the layer and the elongate elements.

3. A substrate according to claim 1 or 2, where the base and elongate elements are a monolithic element.

4. A substrate according to any of the preceding claims, wherein the base and/or elongate elements is/are made of fused silica.

5. A substrate according to any of the preceding claims, wherein each of the base and elongate elements is/are made of a material transmitting, through a thickness of 0.5mm, at least 20% of radiation in a waveband having a width of at least 100nm and being within 100nm and 1.3µm.

6. A substrate according to any of the preceding claims, where the first and/or second materials is/are selected from the group consisting of: Ag, Au, Pt, Pa, Al, Cu, a group III-V material and/or a semiconductor material.

7. A substrate according to any of the preceding claims, wherein the elongate elements have a height, in a longitudinal direction thereof, of 20-1000nm.

8. A substrate according to any of the preceding claims, wherein the elongate elements have a width, perpendicular to a longitudinal direction thereof, of 20-1000 nm.

9. A substrate according to any of the preceding claims, wherein the elongate elements are positioned with a density of 15.6*10⁹-25*10¹⁶ elongate elements per m².

10. A substrate according to any of the preceding claims, where the gap(s)/cavity(ies) between the layer and one or more elongate element(s) is/are 1-500nm wide.

11. A substrate according to any of the preceding claims, where the gap(s)/cavity(ies) between the layer and one or more elongate element(s) prevent(s) electrical connection between the layer and the tip(s) of the pertaining elongate element(s).

12. A substrate according to any of the preceding claims, wherein the layer has a thickness of 5-1000nm.

13. A substrate according to any of the preceding claims, wherein the elongate elements are tube-shaped elements.

14. A method of identifying a substance, the method comprising the steps of:
- providing a substrate according to any of the preceding claims,
- providing the substance on the tips and layer of the substrate,
- launching first radiation comprising radiation of a second predetermined wavelength toward the substance,
- detecting second radiation output from the substance at a third predetermined wavelength, the second and/or third wavelength being identical to the first wavelength,
- identifying the substance from the detected second radiation.

15. A method according to claim 14 wherein the first and/or the second radiation travels, during the launching step, through at least one gap/cavity.

16. A method according to claim 14 or 15 wherein, during the launching step, at least part of the first radiation is launched toward the substance through the base.

17. A method according to any of claims 14-16 wherein, during the detecting step, at least part of the second radiation travels through the base before detection
